# EUROPEAN PATENT SPECIFICATION

(11) **EP 2 984 130 B1**
(45) Date of publication and mention of the grant of the patent: **13.10.2021**
(21) Application number: 14727912.9
(22) Date of filing: 08.04.2014
(51) Int. Cl.: C08J 11/04, C08J 11/06, C08L 23/08, C08J 3/00, C08K 3/34, C08L 23/06, C08L 23/12

(54) **IMPROVED POLYOLEFIN MIXTURE**
VERBESSERTE POLYOLEFINMISCHUNG
MÉLANGE DE POLYOLÉFINES AMÉLIORÉ

(30) Priority: 09.04.2013 IT MI20130557
(43) Date of publication of application: 17.02.2016
(73) Proprietor: Piaggio&C. S.p.A., 56025 Pontedera (Pisa) (IT)
(72) Inventor: CIARDELLI, Francesco, I-56025 Pontedera (Piaggio) (IT); BARTOLOMMEI, Laura, I-56025 Pontedera (Pisa) (IT)
(74) Representative: Croce, Valeria
(86) International application number: PCT/IB2014/060528
(87) International publication number: WO 2014/167493

(56) References cited:
- EP-A1- 2 186 852
- EP-A1- 2 537 883
- WO-A1-97/11114
- US-A- 5 895 790
- US-B2- 6 797 216

## Description

The present invention relates to a polyolefin mixture characterized by a particular qualitative and quantitative composition, which finds use in the automotive field.

### BACKGROUND OF THE ART

In the automotive field, and more generally in the automotive industry, the use of materials of a polyolefin nature is more and more widespread.

Indeed, a number of components both of the bodywork and the interior trim are made of such materials.

It is the case, for example, of the motor cover, filter boxes, shields, sides, footrests, under-seat, topcase, etc.

Olefin compositions used for these purposes are already known; however, there is a continuous search for enhanced raw materials in order to solve specific needs.

By way of example, one of the most felt problems in the automotive field is the weight (specific weight) of the materials.

In fact, although it is not generally impossible to obtain lighter materials, the search for materials less heavy but still characterized by the same mechanical strength represents a far more arduous challenge. Moreover, it is apparent, that the solution to such problem should however take into account also the economic factor; in other words, the developed material has not to affect significantly the final cost of the vehicle or motorcycle.

Furthermore, in the last decades, the awareness of the public opinion towards environmental issues has increased; for example, the problem of the impact caused by wastes once the life cycle of a good or a product has finished is strongly felt.

All those initiatives aimed at recovering materials coming from the recycling are therefore more and more appreciated.

The prior art document EP 2.537.883 A1 discloses a process for recycling polymeric materials, which comprises the step of mixing a functional filler to plastic waste material, represented by an inorganic particulate and a coating comprising, in turn, a propanoic or ethylene terminal group with two adjacent carbonyl groups.

The purpose of such a coating is to improve the compatibility of the inorganic particulate for the polymer matrix with which it is combined.

The prior art document WO 97/11114 discloses the use of fly ashes as a filler to obtain polymeric compositions comprising atactic polypropylene and mixtures of HDPE, LDPE and LLDPE or PET, wherein the derivatives of polyethylene, and not of polypropylene, may possibly come from recycling.

The prior art document US 5.895.790 discloses a process for the preparation of a recycled polymeric material that comprises the use of cross-linking agents to obtain a mixture.

The patent application EP 2.186.852 A1 discloses a process for the recovery by recycling of working scraps to obtain a thermoformable composite material consisting of a thermoplastic resin and decorative plastic laminates composed of cellulose impregnated with thermosetting resins.

Therefore, the purpose of the present invention is to provide a new material usable for manufacturing vehicles and motorcycles parts, and especially parts whose production by injection moulding or thermoforming or extrusion can be problematic, due to the complex shape of the element and hence of the mould.

Such vehicle parts are at the same time light-weighted and resistant, as well as having a "reduced environmental impact".

### OBJECT OF THE INVENTION

A first object of the invention relates to a process for manufacturing a new material suitable for the production of products and, particularly, of vehicle and motorcycle parts according to claim 1 and dependent claims.

The material that can be obtained by such a process represents a further object of the invention. Furthermore, a process for manufacturing industrial products, especially of vehicle and motorcycle elements, with the mixture of the invention is described.

### BRIEF DESCRIPTION OF THE DRAWINGS

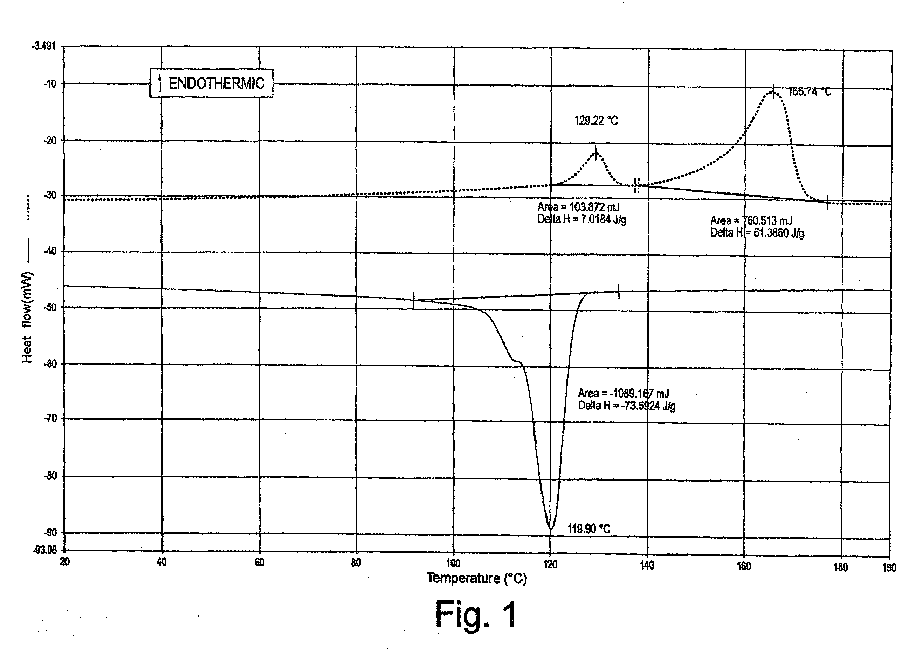

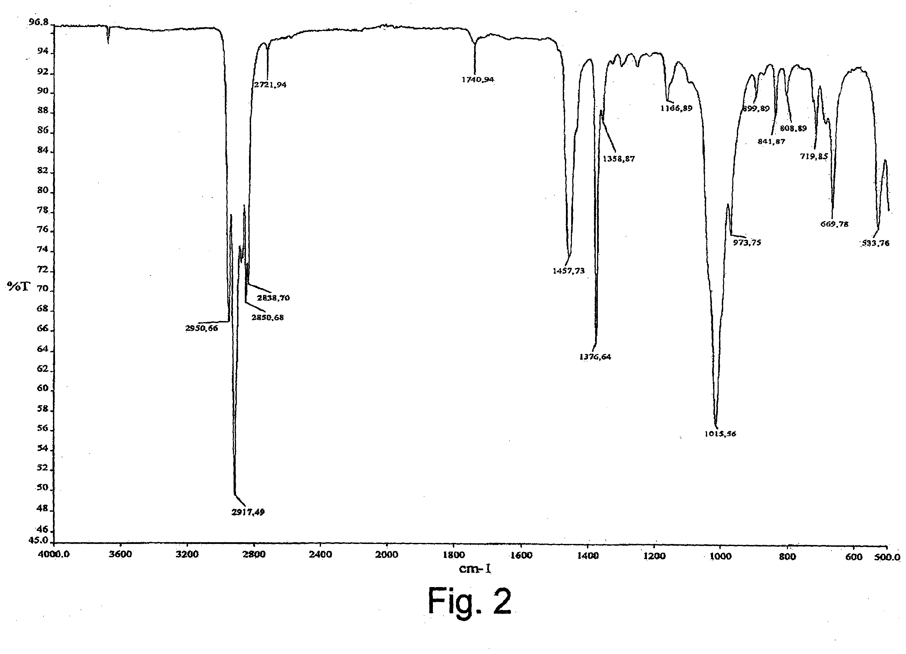

Fig. 1 shows the specific heat-temperature chart of a polyolefin mixture, obtained by differential scanning calorimetry (DSC), while Fig. 2 sets forth the FTIR spectrum of the gaseous phase developed by the mixture.

### DETAILED DESCRIPTION OF THE INVENTION

According to a first object, the present invention describes a process for the production of a polyolefin material as per claim 1 and dependent claims.

In particular, such a process comprises a first step a) wherein a base mixture (MB) and a polymeric mixture (MPR) are further mixed together.

In a preferred aspect, said base mixture (MB) consists in said polypropylene (PP) and polyethylene (PE).

More in detail, the base mixture (MB) comprises a polymer selected from polypropylene (PP) and polyethylene (PE).

As regards polypropylene PP, it may be a polypropylene homopolymer or copolymer.

For the purposes of the present invention, by the term polypropylene homopolymer it is meant a polymer having a high isotactic degree containing only propylene monomeric units joined head-to-tail, while by the term polypropylene copolymer it is meant a polymer as stated above, containing even small amounts (less than 10%) of ethylene.

Instead, by the term polyethylene (homopolymer) it is meant a linear polymer only of ethylene monomeric units, therefore highly crystalline.

For the purposes of the present invention, the polyethylene may be high density polyethylene (HDPE), i.e., a highly crystalline ethylene linear homopolymer (100% ethylene), a low density polyethylene (LDPE), i.e., with short and long branches, or it may be linear low density polyethylene (LLDPE), with short branches, i.e., an ethylene copolymer with C3-C8 alpha-olefins (i.e., a ethylene copolymer with mono-substituted olefins: propylene, 1-butene, 1-hexene, 1-octene, etc. or very low density (VLDPE) or ultra-low density (ULDPE) linear polyethylene similar to LLDPE, but with a higher content of mono-substituted olefins.

For the purposes of the present invention, the base mixture MB comprises one or more of one of the polymers selected from polypropylene and polyethylene stated above.

In a preferred aspect, the mixture MB consists in the polypropylene and/or polyethylene described above. According to a first aspect, the components of the mixture MB, or at least one of them, are virgin, i.e., used for the first time.

Instead, in an alternative aspect of the invention, one or more of the components of the mixture MB are of post-industrial origin.

Therefore, it is possible that some components of the mixture MB are virgin and that some are of a post-industrial origin.

In this meaning, it is meant that such components are represented by industrial scraps and, i.e., by residues and/or scraps coming from or resulting from industrial processing of virgin plastic materials.

Therefore, they are materials composed of one or more polyolefins.

Therefore, in a particularly preferred aspect of the invention, the mixture MB comprises polypropylene and/or polyethylene as described above, wherein one or both said polypropylene and polyethylene are either virgin or of a post-industrial origin.

Therefore, polypropylene and polyethylene of a post-consumer origin are excluded.

Instead, as regards the polymeric mixture MPR, this consists in a mixture of polyolefins deriving from recycling of post-consumer (optionally referred to also as "post-use") plastic materials.

For the purposes of the present invention, by the term "post-consumer plastic materials" there are meant the selected plastic materials deriving from the separate collection of wastes, especially of municipal solid wastes.

Another possible definition indicates that the "post-consumer materials" are those materials which the consumer has stopped using and which may be sold, thrown away, or discarded as waste (The Global Development Research Centre. Solid waste management. Glossary; http://glossary.eea.europa.eu).

For the purposes of the present invention, it is apparent that the "post-consumer materials" (or "post-use materials") do not include the materials of post-industrial origin defined above.

The following Table 1 sets forth some comparison characteristics relating to virgin, post-industrial and post-consumer polyolefins.

**Table 1**

| **Polyolefin** | **Monomeric composition** | **Macromoleucular composition** | **Properties** | **Applications** |
|---|---|---|---|---|
| **virgin** | Homo- or heterogeneous | homogeneous | Predetermined | Predetermined |
| **post-industrial** | Homo- or heterogeneous | homogeneous | Similar to the virgin polymer | Similar to the virgin polymer |
| **post-consumer** | heterogeneous | heterogeneous | Depending on the macromoleucular composition | Variable with the composition |

In fact, it is herein described how it has been surprisingly found that post-consumer plastic materials can be reintroduced in the industrial productive cycle to achieve a polyolefin mixture suitable for the purposes of the present invention, without the need of preliminarily carrying out expensive separation processes of the plastic materials recovered from the municipal solid waste.

Therefore, the present invention provides a process to convert a mixture of plastic materials that mutually differ, obtained from post-consumer and optionally also post-industrial recycling, in a formulated product from which new finished products can be obtained, characterized by highly desirable mechanical properties, and in some cases, even improved compared to the products obtained from the corresponding virgin plastic materials.

With reference to the components of the mixture of the invention, the mixture MPR comprises:
- 20-35% % polypropylene (PP),
- 20-35% high density polyethylene (HDPE),
- 25-45% low density polyethylene (LDPE),
- 30-40% low density polyethylene(LDPE/LLDPE/VLDPE/ULDPE);
wherein the percentages are in weight, based on the total weight of the mixture MPR to 100% and they are selected so that the sum of the percentages of each component (within the range indicated for each of them) is 100%.

Also, the polymeric mixture (MPR) represents 30%-50%, preferably 30%-40% (p/p) on the total weight of the mixture of the invention.

For the present purposes, the polypropylene in the mixture MPR is represented by polypropylene homopolymer and copolymer with few ethylene (i.e., less than 10%), while polyethylene may be a low density polyethylene (LDPE) or linear low density polyethylene (LLDPE) up to a ultra-low density (ULDPE).

In a more preferred aspect, the three components of the mixture MPR are in ratios of about 1:1:1 (PP:HDPE:LDPE+LLDPE), respectively.

Furthermore, the mixture MPR preferably does not contain one or more of: PET, PET-Nylon, PVC, wherein it is meant that these can be optionally contained in a <2% percentage, and preferably <1% each (by weight on the total weight of the mixture MPR).

As regards obtaining the polyolefin composition of the invention, the mixtures (MB) and (MPR) are mixed together in a ratio ranging between 4:1 and 1:1 (MB:MPR), and preferably ranging between 3:1 and 2:1 (MB:MPR).

The latter aspect is particularly surprising; in fact, as it is known to those of ordinary skill in the art, some plastic materials are known to be incompatible with each other, and their mixing, especially in significant amounts, is sometimes unfeasible.

It has been surprisingly found that the end mixture has optimal characteristics, some of which are set forth in the following Table 2 together with the corresponding properties of the individual virgin or post-consumer polyolefins (abbreviated in the following table by MPU) .

**Table 2**

| **Polymer** | **Flexural elastic modulus** | **Ultimate tensile strength** | **Elongation at break, %** | **Impact resistance , IZOD** |
|---|---|---|---|---|
| | **(MPa)** | **(MPa)** | | **(kJ/m2)** |
| **HDPE** | 500-600 | 15-30 | 150-1000 | 60 |
| **PP** | 1200-1700 | 31-41 | 10-70 | 2-10 |
| **PPco** | 900 | | 300 | 60 |
| **LDPE** | 200-500 | 16-24 | 300-1000 | |
| **LLDPE** | 350 | 9-12 | 200-800 | 11 |
| **MPU (HDPE rich in LDPE)** | 390 | 7.5 | 400 | 2.5 |
| **MPU(PP/HD PE/LDPE)** | 1180 | 15.4 | 14 | 5.6 |

From the data set forth in Table 2, there emerges that a post-consumer material (MPU) cannot be used as such, since it has unfavorable mechanical properties.

On the contrary, the inventors of the present patent application have found that it is possible to mix a mixture obtained from post-consumer materials with other components, particularly virgin polyolefins and/or polyolefins of post-industrial origin, thus obtaining a composition that is homogeneous, processable, and having the following advantageous properties:

| | |
|---|---|
| **Chemical-physical characteristics** | **VALUE** |
| DENSITY | 0.958 Kg/dm3 |
| LINEAR EXPANSION COEFFICIENT | 0.30 mm/m/° C |
| ABSORPTION IN WATER | < 0.1% |

**Tensile tests**

| | |
|---|---|
| ELASTIC MODULUS | 340 MPa |
| ULTIMATE STRENGTH | 14 MPa |
| ELONGATION AT BREAK | 9.14% |
| IZOD VALUE | 3.0 KJ/m2 |
| VICAT TEMPERATURE | 102° C |

**Flexural tests**

| | |
|---|---|
| Flexural elastic modulus | 107 MPa |
| Ultimate strength | 16,5 MPa |
| Elongation at break | 5% |

In a preferred aspect, the polyolefin mixture is particularly characterized by the following properties:

| | |
|---|---|
| ELASTIC MODULUS | 300-380 MPa |
| ULTIMATE STRENGTH | 10-20 MPa |
| ELONGATION AT BREAK | 7-11% |
| IZOD VALUE | 2-5 KJ/m2 |

and still more preferably by the following properties:

| | |
|---|---|
| ELASTIC MODULUS | 340 MPa |
| ULTIMATE STRENGTH | 14 MPa |
| ELONGATION AT BREAK | 9.14% |
| IZOD VALUE | 3.0 KJ/m2. |

The mixture of the invention may be further added with additives in order to impart particular processability characteristics thereto, for example, in order to promote the processability thereof, or to impart particular properties to the product obtained from it, such as, for example, resistance to chemical agents and ultraviolet radiations, etc.

For example:
- plastifiers, preferably in amounts of about 0-1% (w/w);
- dyes, preferably in amounts of about 0-2 (w/w)
- anti-oxidants, preferably in amounts of about 0,5-1% (w/w);
- lubricants, preferably in amounts of about 0,5-1% (w/w);
- anti-UV additives, preferably in amounts of about 0,5-1% (w/w);
- flame-retardant additives: aluminum hydroxide, magnesium hydroxide, zinc borate or melamine borate, preferably in amounts of about 10-50% (w/w);
- pigments, preferably in amounts of about 0,5-1% (w/w), can be mentioned.

The additives that may be added for the purposes of the present invention, particularly, do not include reactive or functional additives, such as cross-linking agents.

Among these, as an example, compounds including a propanoic or ethylene group ending with one or two adjacent carbonyl groups, also referred to as coupling modifiers, are mentioned.

Furthermore, fillers can be added, for example, selected from: talc, barium sulfate, glass beads, glass fibres, calcium carbonate.

These are preferably comprised in a percentage of about 2%-30% (by weight on the total weight of the mixture) and particularly: about 10-30% in case of talc, about 10-20% in case of glass beads; about 5-30% in case of glass fibre, about 20-30% in case of barium sulfate, about 10-30% in case of calcium carbonate.

In a preferred aspect of the invention, the described mixtures do not include fly ashes neither, as fillers nor as additives.

An example of a preferred polyolefin composition according to the present invention is represented by the following composition (weight percentages based on the whole weight):

| | |
|---|---|
| Base mixture (MB) | 59% |
| Polymeric mixture (MPR) | 30% |
| Talc: | 10% |
| Additives | 1% |

Particularly, the 59% fraction of the base mixture (MB) is, in turn, composed of:
- 32% (p/total weight of the mixture of the invention) of virgin polymer
- 27% (p/p) of post-industrial polymer.

Instead, the 30% fraction of the mixture MPR is, in turn, composed of:
- 30.7% PP,
- 27.7% HDPE,
- 37.1% LDPE (mixture of LDEP, LLDPE, and/or WLDPE)
- 4.5% inorganic material;
wherein the percentages are set forth by weight on the weight of the mixture MPR to 100%.

According to a further aspect, the present invention provides a process for the preparation of an improved polyolefin mixture comprising an amount of polyolefins obtained by recycling post-consumer plastic materials.

Particularly, such process comprises a step a) in which a base mixture (MB) is mixed to a polymeric mixture (MPR) .

As regards the mixtures MB and MPR, they are the mixtures described above.

Particularly, in the step a) of the process, the mixtures (MB) and (MPR) are mixed together in a ratio ranging between 4:1 and 1:1 (MB:MPR), and preferably between 3:1 and 2:1 (MB:MPR).

Still more preferably, the mixture (MPR) represents about 30%-50%, preferably 30-40%, of the weight of the end mixture.

According to an aspect of the present invention, before step a), one proceeds with a step i) for the preparation of the polymeric mixture (MPR) starting from recycling post-use plastic materials.

In practice, the step i) comprises the steps of:
I) separating by separate collection the post-consumer plastic materials from the other municipal solid wastes; and
II) melting such plastic materials.

Optionally, it is possible to continue with the further steps of:
III) treating the melt by an extruder; and, optionally
IV) cooling and optionally pelletizing the melt so as to achieve processable granules.

Therefore, the step a) of the preparation of the improved mixture of the invention comprises mixing granules having the composition deriving from the combination of the polymeric mixture (MPR) with the base mixture (MB).

After the step a), a successive step b) may be further comprised, in which one or more additives are added in order to impart particular properties.

Such additives, in particular, can be one or more of the plastifiers, dyes, anti-oxidants, lubricants, flame retardants, described above.

One or more of the above-mentioned fillers may also be added.

According to a further object of the present invention, a process for manufacturing industrial products starting from the polyolefin mixture described above is disclosed.

Such products can be represented, only to mention some examples, from articles of furniture of parts thereof, parts of household appliances or tools, structural elements of computers or printers, objects, etc.

In a preferred aspect, the mixture of the invention is particularly useful to obtain parts and/or elements of vehicles or motorcycles.

For example, parts of so-called "painted" elements can be obtained, such as shields, sides, counter shields, topcases, etc. or bodywork elements coloured in bulk, such as footrests, counter shields, topcases, etc; other non-visible elements, such as under seat compartments, helmet storage compartments, etc. Therefore, they are elements having a rather complex shape and geometry.

The parts and/or the elements obtained with the polyolefin mixture of the invention have shown to have unexpected and advantageous properties for the purposes to which they are intended.

Particularly, the articles are more light-weighted than those obtained starting from a virgin plastic material, while having an optimal mechanical strength.

The process for manufacturing products, and preferably parts and/or elements of vehicles or motorcycles starting from the polyolefin mixture of the invention comprising a step a') in which such mixture is subjected to injection moulding or thermoforming or extrusion.

In a particular aspect, the polyolefin mixture subjected to injection moulding or thermoforming or extrusion is the one that can be obtained by the process described above.

In this regard, it has been surprisingly noticed that such mixture has a conversion temperature of about 30-40° C less than the compositions known in the art. Furthermore, during the moulding process, it has been noticed that the mixture which is the object of the present patent application has excellent flowing properties, which allow a better and quicker filling of the mould, thus advantageously reducing the manufacturing time.

### EXAMPLE 1

A moulding test aimed to check the use suitability of the polyolefin composition according to the present invention in moulding articles for the automotive field has been carried out. The polyolefin resin comprised a mixture MPR, in the form of granules, entirely obtained starting from material recycled by the separate collection of post-consumer materials mixed to the base mixture MB.

Particularly, the composition of the polyolefin mixture was as follows (weight percentages referred to the total weight):

| | |
|---|---|
| Base mixture (MB) | 59% |
| Polymeric mixture (MPR) | 30% |
| Talc: | 10% |
| Additives | 1% |

Particularly, the 59% fraction of the base mixture (MB) is in turn composed of:
- 32% (w/total weight of the mixture of the invention) virgin polymer
- 27% (p/p) polymer of industrial recycling.

On the other hand, the 30% fraction of the mixture MPR, is composed of:
- 30.7% PP,
- 27.7% HDPE,
- 37.1% LDPE (mixture of LDEP, LLDPE, and/or WLDPE)
- 4.5% inorganic material;
wherein the percentages are referred by weight on the weight of the mixture MPR to 100%.

The mixture obtained according to the invention has been investigated to determine the physical, rheologic, mechanical, and thermal properties thereof, which are reported in the following Table 4:

| **Properties** | **Value** | **Method** |
|---|---|---|
| Gravimetric melt flow index (230° C-2.16 kg) | 15 g/10' | ISO 1133:2005 |
| Calcination residue | 10.7% | ISO 3451 |
| Flexural elastic modulus (2 mm/min) 23° C | 1700 MPa | ISO 178:2003 |
| IZOD Resilience, notched 23° C | 4.8 kJ/m2 | ISO 180/1A |
| VICAT softening temperature B/50 - 50N | 76° C | ISO 306 |

The blend used in the example was characterized by differential scanning calorimetry (DSC) (Fig. 1) and by FTIR spectrophotometry of the gaseous phase developed by the mixture after heating in oxygen from 30° C to 800° C (Fig. 2).

The blend was tested in moulding components with a particularly complex geometry, such as:
- counter shield of a motorcycle (e.g., Vespa Lxe, Vespa GT),
- footrest of a motorcycle (e.g., Piaggio MP3, Vespa GTS),
- front fender of a motorcycle (e.g., Piaggio MP3) .

The characteristics of the components obtained with the polyolefin composition according to the present invention have been compared to those of a polyolefin composition according to the state of the art:

| | |
|---|---|
| - PP Copolymer (5% by weight ethylene with respect to propylene): | 89% |
| - Mixed filler | 10% |
| - Additives | 1%. |

The reference polyolefin composition has been moulded by following the same operative modes that were used for moulding the polyolefin composition of the invention, without adjusting the conversion temperatures, which, for the polyolefin composition of the invention, were lower of about 30-40° C.

The polyolefin composition according to the invention showed a high flowability, better than the reference polyolefin composition (MFI = 15 vs. MF = 12 - MFI Melt Flow Index) and consequently a better ability in filling the mould and a reduction of the working time. The moulded components were subjected to an impact test, which yielded a positive outcome.

Particularly, the components obtained with the polyolefin composition according to the invention weighted about 8% by weight less than the corresponding ones obtained with the reference polyolefin composition.

To the improved olefin mixture described above, those skilled in the art, in order to meet contingent, specific needs, will be able to make adaptations, modifications, and replacements of components with functionally equivalent other ones, without however departing from the scope of the claims set forth herein below.

## Claims

1. A process for the preparation of a polyolefin mixture comprising the step a) of mixing together a base polymeric mixture MB and a polymeric mixture MPR, wherein said mixture MPR is obtained from the recycling of post-consumer plastic materials which do not include the materials of post-industrial origin, wherein said polyolefins of the mixture MB are either virgin polyolefins or polyolefins of a post-industrial origin, or they are both virgin polyolefins and polyolefins of a post-industrial origin,
wherein said base polymeric mixture MB comprises one or more of the following polyolefins: polypropylene, polyethylene, which are virgin and of post-industrial origin,
wherein said mixture MPR comprises about 20-35% by weight polypropylene (PP), 20-35% by weight high density polyethylene (HDPE) and 30-40% by weight low density polyethylene (LDPE +LLDPE), and
wherein said polymeric mixture MPR represents 30%-40% (p/p) on the total weight of the mixture.

2. The process for the preparation of a polyolefin composition according to claim 1, wherein said mixtures MB and MPR are mixed in a ratio (w/w) ranging respectively between 4:1 and 1:1, preferably ranging between 3:1 and 2:1 (MB:MPR).

3. The process for the preparation of a polyolefin composition according to any one of the preceding claims, wherein said mixture MPR does not contain one or more of: PET, PET-Nylon, PVC.

4. The process for the preparation of a polyolefin composition according to any one of the preceding claims, further comprising a step b) of adding fillers and/or one or more additives selected from: plastifiers, dyes, anti-oxidants, anti-UV agents, flame retardants, lubricants.

5. The process for the preparation of a polyolefin composition according to the preceding claim, wherein said additives and fillers do not include fly ashes and/or wherein said additives do not include crosslinking agents.

6. The process for the preparation of a polyolefin composition according to claim 4 or 5, wherein said fillers are selected from: talc, barium sulfate, glass beads, glass fibres, calcium carbonate; wherein said flame retardant additives are selected from: aluminum hydroxide, magnesium hydroxide, zinc borate, or melamine borate.

7. The process for the preparation of a polyolefin composition according to any one of the claims 4 to 6, wherein said fillers are present in a percentage of about 2%-30% (by weight on the total weight of the mixture), and particularly of about 10-30% in the case of talc, about 10-20% in the case of glass beads; about 5-30% in the case of glass fibre, about 20-30% in the case of barium sulfate, about 10-30% in the case of calcium carbonate.

8. The process for the preparation of a polyolefin composition according to any of the preceding claims, comprising, before the step a), a step i) of preparation of the polymeric mixture (MPR) comprising the recycling of post-consumer plastic materials.

9. The process for the preparation of a polyolefin composition according to the preceding claim, wherein said step i) comprises the steps of:
I) separating by the separate collection the post-consumer plastic materials from the other municipal solid wastes; and
II) melting such plastic materials.

10. The process for the preparation of a polyolefin composition according to the preceding claim, further comprising the step III) of cooling and optionally pelletizing the melt obtained from step II).

11. The process for the preparation of a polyolefin composition according to any of the preceding claims, wherein said mixture MPR is added to the base polymeric mixture MB in the form of granules.

12. The process for manufacturing a product with the use of the polyolefin mixture that can be obtained according to the process of any one of the claims 1 to 11, comprising a step a') in which said polyolefin mixture is subjected to injection moulding or thermoforming or extrusion.

13. A product that can be obtained according to the process of the preceding claim, **characterized in that** it is a component of a vehicle or a motorcycle.

14. A polyolefin mixture comprising, by weight percentages based to the total weight:
| | |
|---|---|
| base mixture (MB) | 59% |
| polymeric mixture (MPR) | 30% |
| talc: | 10% |
| additives | 1% |
wherein, the 59% fraction of the base mixture (MB) is in turn composed of:
- 32% (w/total weight of the mixture) virgin polymer
- 27% (w/w) post-industrial polymer, and wherein the 30% fraction of the mixture MPR is composed of:
- 30.7% PP,
- 27.7% HDPE,
- 37.1% LDPE (mixture of LDEP, LLDPE, and/or WLDPE)
- 4.5% inorganic material;
wherein the percentages are referred to by weight based on the weight of the mixture MPR to 100%.

15. The process for the preparation of a polyolefin mixture according to any one of the preceding claims 1 to 12, wherein the polyolefin mixture comprises, by weight percentage based to the total weight:
Base mixture (MB) 59%
Polymeric mixture (MPR) 30%
Talc 10%
Additives 1%.

## Patentansprüche

1. Verfahren zur Herstellung eines Polyolefingemischs, umfassend den Schritt a) des Vermischens eines Basis-Polymergemischs MB und eines Polymergemischs MPR, wobei das Gemisch MPR aus dem Recycling von Post-Consumer-Kunststoffmaterialien erhalten wird, die keine Materialien post-industriellen Ursprungs einschließen,
wobei die Polyolefine des Gemischs MB entweder frische Polyolefine oder Polyolefine post-industriellen Ursprungs sind, oder sowohl frische Polyolefine als auch Polyolefine post-industriellen Ursprungs sind,
wobei das Basis-Polymergemisch MB eines oder mehrere der folgenden Polyolefine umfasst: Polypropylen, Polyethylen, die frisch und post-industriellen Ursprungs sind,
wobei das Gemisch MPR etwa 20-35 Gew.-% Polypropylen (PP), 20-35 Gew.-% Polyethylen hoher Dichte (HDPE) und 30-40 Gew.-% Polyethylen niedriger Dichte (LDPE+LLDPE) umfasst, und
wobei das Polymergemisch MPR 30-40 % (p/p) des Gesamtgewichts des Gemischs ausmacht.

2. Verfahren zur Herstellung einer Polyolefin-Zusammensetzung nach Anspruch 1, wobei die Gemische MB und MPR in einem Verhältnis (w/w) zwischen 4:1 und 1:1, vorzugsweise zwischen 3:1 und 2:1 (MB:MPR) gemischt werden.

3. Verfahren zur Herstellung einer Polyolefin-Zusammensetzung nach einem der vorhergehenden Ansprüche, wobei das Gemisch MPR nicht eine oder mehrere der folgenden enthält: PET, PET-Nylon, PVC.

4. Verfahren zur Herstellung einer Polyolefin-Zusammensetzung nach einem der vorhergehenden Ansprüche, ferner umfassend einen Schritt b) der Zugabe von Füllstoffen und/oder einem oder mehreren Additiven, ausgewählt aus: Weichmachern, Farbstoffen, Antioxidantien, Anti-UV-Mitteln, Flammschutzmitteln, Gleitmitteln.

5. Verfahren zur Herstellung einer Polyolefin-Zusammensetzung nach dem vorhergehenden Anspruch, wobei die Additive und Füllstoffe keine Flugasche enthalten und/oder wobei die Additive keine Vernetzungsmittel enthalten.

6. Verfahren zur Herstellung einer Polyolefin-Zusammensetzung nach Anspruch 4 oder 5, wobei die Füllstoffe ausgewählt sind aus: Talkum, Bariumsulfat, Glasperlen, Glasfasern, Calciumcarbonat; wobei die flammhemmenden Additive ausgewählt sind aus: Aluminiumhydroxid, Magnesiumhydroxid, Zinkborat oder Melaminborat.

7. Verfahren zur Herstellung einer Polyolefin-Zusammensetzung nach einem der Ansprüche 4 bis 6, wobei die Füllstoffe in einem Prozentsatz von etwa 2% bis 30 % (Gewicht bezogen auf das Gesamtgewicht des Gemischs) vorhanden sind, und insbesondere von etwa 10 - 30 % im Fall von Talkum, etwa 10 - 20 % im Fall von Glasperlen, etwa 5 - 30 % im Fall von Glasfasern, etwa 20 - 30 % im Fall von Bariumsulfat, etwa 10 bis 30 % im Fall von Calciumcarbonat.

8. Verfahren zur Herstellung einer Polyolefin-Zusammensetzung nach einem der vorhergehenden Ansprüche, welches vor dem Schritt a) einen Schritt i) der Herstellung des Polymergemischs (MPR) umfasst, der das Recycling von Post-Consumer-Kunststoffmaterialien umfasst.

9. Verfahren zur Herstellung einer Polyolefin-Zusammensetzung nach dem vorhergehenden Anspruch, wobei der Schritt i) die folgenden Schritte umfasst:
I) Trennen der Post-Consumer-Kunststoffmaterialien von den anderen festen kommunalen Abfällen durch getrenntes Sammeln; und
II) Schmelzen dieser Kunststoffmaterialien.

10. Verfahren zur Herstellung einer Polyolefin-Zusammensetzung nach dem vorhergehenden Anspruch, ferner umfassend den Schritt III) des Kühlens und gegebenenfalls Granulierens der in Schritt II) erhaltenen Schmelze.

11. Verfahren zur Herstellung einer Polyolefin-Zusammensetzung nach einem der vorhergehenden Ansprüche, wobei das Gemisch MPR zu dem Basis-Polymergemischs MB in Form von Granulat zugegeben wird.

12. Verfahren zur Herstellung eines Produkts unter Verwendung des Polyolefingemischs, das nach dem Verfahren eines der Ansprüche 1 bis 11 erhalten werden kann, umfassend einen Schritt a'), bei dem das Polyolefingemisch einem Spritzgießen oder einer Thermoformung oder einer Extrusion unterzogen wird.

13. Produkt, das nach dem Verfahren des vorhergehenden Anspruchs erhalten werden kann, **dadurch gekennzeichnet, dass** es ein Bauteil eines Fahrzeugs oder eines Motorrads ist.

14. Polyolefingemisch umfassend, in Gewichtsprozenten, bezogen auf das Gesamtgewicht:
| | |
|---|---|
| Basisgemisch (MB) | 59% |
| Polymergemisch (MPR) | 30% |
| Talkum: | 10% |
| Additive | 1% |
wobei der 59%ige Anteil an Basisgemisch (MB) seinerseits zusammengesetzt ist aus:
- 32% (Gew./Gesamtgewicht des Gemischs) frischem Polymer
- 27% (w/w) post-industriellem Polymer,
und wobei der 30%ige Anteil an Gemisch MPR zusammengesetzt ist aus:
- 30,7% PP,
- 27,7% HDPE,
- 37,1% LDPE (Gemisch aus LDEP, LLDPE und/oder WLDPE)
- 4,5% anorganischem Material;
wobei sich die Prozentangaben auf das Gewicht bezogen auf das Gewicht des Gemischs MPR zu 100% beziehen.

15. Verfahren zur Herstellung eines Polyolefingemischs nach einem der vorhergehenden Ansprüche 1 bis 12, wobei das Polyolefingemisch in Gewichtsprozent, bezogen auf das Gesamtgewicht, umfasst:
| | |
|---|---|
| Basisgemisch (MB) | 59% |
| Polymergemisch (MPR) | 30% |
| Talkum | 10% |
| Additive | 1%. |

## Revendications

1. Procédé pour la préparation d'un mélange de polyoléfines comprenant l'étape a) consistant à mélanger ensemble un mélange polymère de base MB et un mélange polymère MPR, dans lequel ledit mélange MPR est obtenu à partir du recyclage de matières plastiques post-consommation qui n'incluent pas les matières d'origine post-industrielle, dans lequel lesdites polyoléfines du mélange MB sont soit des polyoléfines vierges, soit des polyoléfines d'origine post-industrielle, soit à la fois des polyoléfines vierges et des polyoléfines d'origine post-industrielle,
dans lequel ledit mélange polymère de base MB comprend une ou plusieurs des polyoléfines suivantes : polypropylène, polyéthylène, qui sont vierges et d'origine post-industrielle,
dans lequel ledit mélange MPR comprend environ 20-35 % en poids de polypropylène (PP), 20-35 % en poids de polyéthylène haute densité (HDPE) et 30-40 % en poids de polyéthylène basse densité (LDPE + LLDPE), et
dans lequel ledit mélange polymère MPR représente 30-40 % (p/p) par rapport au poids total du mélange.

2. Procédé pour la préparation d'une composition de polyoléfines selon la revendication 1, dans lequel lesdits mélanges MB et MPR sont mélangés selon un rapport (M/M) s'échelonnant respectivement entre 4/1 et 1/1, de préférence s'échelonnant entre 3/1 et 2/1 (MB/MPR).

3. Procédé pour la préparation d'une composition de polyoléfines selon l'une quelconque des revendications précédentes, dans lequel ledit mélange MPR ne contient pas un ou plusieurs parmi : le PET, le PET-nylon, le PVC.

4. Procédé pour la préparation d'une composition de polyoléfines selon l'une quelconque des revendications précédentes, comprenant en outre une étape b) consistant à ajouter des charges de remplissage et/ou un ou plusieurs additifs sélectionnés parmi : des plastifiants, des colorants, des antioxydants, des agents anti-UV, des retardateurs de flamme, des lubrifiants.

5. Procédé pour la préparation d'une composition de polyoléfines selon la revendication précédente, dans lequel lesdits additifs et lesdites charges de remplissage n'incluent pas de cendres volantes et/ou dans lequel lesdits additifs n'incluent pas d'agents de réticulation.

6. Procédé pour la préparation d'une composition de polyoléfines selon la revendication 4 ou 5, dans lequel lesdites charges de remplissage sont sélectionnées parmi : le talc, le sulfate de baryum, les billes de verre, les fibres de verre, le carbonate de calcium ; dans lequel lesdits additifs de retardateur de flamme sont sélectionnés parmi : l'hydroxyde d'aluminium, l'hydroxyde de magnésium, le borate de zinc ou le borate de mélamine.

7. Procédé pour la préparation d'une composition de polyoléfines selon l'une quelconque des revendications 4 à 6, dans lequel lesdites charges de remplissage sont présentes dans un pourcentage d'environ 2 %-30 % (en poids par rapport au poids total du mélange), et en particulier d'environ 10-30 % dans le cas du talc, d'environ 10-20 % dans le cas des billes de verre ; d'environ 5-30 % dans le cas de la fibre de verre, d'environ 20-30 % dans le cas du sulfate de baryum, d'environ 10-30 % dans le cas du carbonate de calcium.

8. Procédé pour la préparation d'une composition de polyoléfines selon l'une quelconque des revendications précédentes, comprenant, avant l'étape a), une étape i) de préparation du mélange polymère (MPR) comprenant le recyclage de matières plastiques post-consommation.

9. Procédé pour la préparation d'une composition de polyoléfines selon la revendication précédente, dans lequel ladite étape i) comprend les étapes consistant à :
I) séparer par la collecte séparée les matières plastiques post-consommation des autres déchets solides municipaux ; et
II) faire fondre de telles matières plastiques.

10. Procédé pour la préparation d'une composition de polyoléfines selon la revendication précédente, comprenant en outre l'étape III) consistant à faire refroidir et facultativement transformer en pellets la matière fondue obtenue à partir de l'étape II).

11. Procédé pour la préparation d'une composition de polyoléfines selon l'une quelconque des revendications précédentes, dans lequel ledit mélange MPR est ajouté au mélange polymère de base MB sous la forme de granulés.

12. Procédé pour la fabrication d'un produit avec l'utilisation du mélange de polyoléfines qui peut être obtenu selon le procédé de l'une quelconque des revendications 1 à 11, comprenant une étape a') dans laquelle ledit mélange de polyoléfines est soumis à un moulage par injection ou un thermoformage ou une extrusion.

13. Produit qui peut être obtenu selon le procédé de la revendication précédente, **caractérisé en ce qu'**il s'agit d'un composant d'un véhicule ou d'une motocyclette.

14. Mélange de polyoléfines comprenant, en pourcentages en poids sur la base du poids total :
| | |
|---|---|
| mélange de base (MB) | 59% |
| mélange polymère (MPR) | 30% |
| talc : | 10% |
| additifs : | 1 % |
dans lequel la fraction de 59 % du mélange de base (MB) est à son tour composée de :
- 32 % (poids/poids total du mélange) de polymère vierge
- 27 % (poids/poids) de polymère post-industriel, et dans lequel la fraction de 30 % du mélange MPR est composée de :
- 30,7 % de PP,
- 27,7 % de HDPE,
- 37,1 % de LDPE (mélange de LDEP, LLDPE et/ou WLDPE),
- 4,5 % de matière inorganique ;
dans lequel il est fait référence aux pourcentages en poids sur la base du poids du mélange MPR sur 100 %.

15. Procédé pour la préparation d'un mélange de polyoléfines selon l'une quelconque des revendications 1 à 12 précédentes, dans lequel le mélange de polyoléfines comprend, en pourcentage en poids sur la base du poids total :
| | |
|---|---|
| mélange de base (MB) | 59 % |
| mélange polymère (MPR) | 30 % |
| talc | 10 % |
| additifs | 1 %. |
